# EUROPÄISCHE PATENTSCHRIFT

(11) **EP 3 868 252 B1**
(45) Veröffentlichungstag und Bekanntmachung des Hinweises auf die Patenterteilung: **22.06.2022**
(21) Anmeldenummer: 20158380.4
(22) Anmeldetag: 20.02.2020
(51) Int. Cl.: A47B 9/02

(54) **AUFNAHMEVORRICHTUNG SOWIE EIN VERFAHREN ZUR ANSTEUERUNG EINER AUF EINE HÖHENVERSTELLBARE AUFNAHMEEINHEIT EINER AUFNAHMEVORRICHTUNG WIRKENDEN BREMSE**
RECEIVING DEVICE AND METHOD FOR CONTROLLING A BRAKE ACTING ON A HEIGHT-ADJUSTABLE RECEIVING UNIT OF A RECEIVING DEVICE
DISPOSITIF DE RÉCEPTION AINSI QUE PROCÉDÉ DE COMMANDE D'UN FREIN AGISSANT SUR UNE UNITÉ DE RÉCEPTION RÉGLABLE EN HAUTEUR D'UN DISPOSITIF DE RÉCEPTION

(43) Veröffentlichungstag der Anmeldung: 25.08.2021
(73) Patentinhaber: RealThingks GmbH, 40668 Meerbusch (DE)
(72) Erfinder: Swetharanyam, Sugandar, 40668 Meerbusch (DE); Jakobsson, Karl Peter, 40668 Meerbusch (DE)
(74) Vertreter: Berkenbrink, Kai-Oliver

(56) Entgegenhaltungen:
- EP-A2- 0 948 918
- WO-A1-2006/087210
- WO-A1-2020/083827

## Beschreibung

Die Erfindung betrifft eine Aufnahmevorrichtung sowie ein Verfahren zur Ansteuerung einer auf eine höhenverstellbare Aufnahmeeinheit einer Aufnahmevorrichtung wirkenden Bremse.

Eine Aufnahmevorrichtung dient dazu, Gegenstände aufzunehmen, um diese in verschiedenen Höhen zur Verfügung stellen zu können. Zur Aufnahme der Gegenstände weist eine Aufnahmevorrichtung eine Aufnahmeeinheit auf. Die Aufnahmeeinheit ist zur Aufnahme von Gegenständen ausgebildet, beispielsweise indem die Gegenstände auf die Aufnahmeeinheit aufgelegt oder in sonstiger Weise an dieser angeordnet werden können, beispielsweise auch an dieser befestigt werden können. Bei einer solchen Aufnahmevorrichtung kann es sich beispielsweise um einen Tisch handeln, sodass die Aufnahmeeinheit eine höhenverstellbare Tischplatte darstellt. Auf die Tischplatte können beispielsweise Gegenstände in Form von Büchern, Computern etc. aufgelegt werden.

Die Höhenverstellbarkeit der Aufnahmeeinheit einer solchen Aufnahmevorrichtung kann beispielsweise gewünscht sein, um auf die Aufnahmeeinheit gelegte Gegenstände in unterschiedlichen Höhen zur Verfügung stellen zu können, beispielsweise weil diese in unterschiedlichen Höhen einem weiteren Aggregat zur Verfügung gestellt werden sollen oder weil ein Nutzer der Aufnahmevorrichtung die Gegenstände auf der Aufnahmeeinheit in verschiedenen Höhen zur Verfügung gestellt haben möchte. Letzteres kann beispielsweise aus ergonomischen Gründen gewünscht sein. Ferner kann die Höhenverstellbarkeit einer Aufnahmeeinheit beispielsweise deshalb gewünscht sein, da ein Benutzer der Aufnahmevorrichtung zum einen beim Sitzen und zum anderen beim Stehen auf die auf der Aufnahmeeinheit angeordneten Gegenstände zugreifen möchte.

Um die Aufnahmeeinheit solcher Aufnahmevorrichtungen höhenverstellbar zur Verfügung stellen zu können, ist es aus dem Stand der Technik bekannt, Gasdruckfedern zu verwenden. Solche Gasdruckfedern stellen auf die Aufnahmeeinheit wirkende Federkräfte derart bereit, dass auf die Aufnahmeeinheit wirkende Kräfte, insbesondere Gewichtskräfte, derart ausgeglichen werden können, dass die Aufnahmeeinheit in verschiedenen Höhen bereitgestellt werden kann. In der Regel sind entsprechende Gasdruckfedern zwischen der Aufnahmeeinheit und dem Untergrund, auf dem die Aufnahmevorrichtung angeordnet ist, angeordnet, sodass die Gasdruckfedern mit ihrer Federkraft der auf die Aufnahmeeinheit wirkenden Schwerkraft entgegenwirken. Gemäß dem Stand der Technik stellen solche Gasdruckfedern eine festgelegte Federkraft zur Verfügung, die auf eine erwartbare Gewichtskraft der Aufnahmeeinheit ausgelegt ist. In der Regel ist die Höhe der Federkraft der Gasdruckfeder dabei derart bemessen, dass sie die Schwerkraft der Aufnahmeeinheit ausgleicht, sodass die Aufnahmeeinheit durch die Gasdruckfeder in der "Balance" gehalten werden kann beziehungsweise eine Balance hinsichtlich der Gewichtskraft der Aufnahmeeinheit und der Federkraft der Gasdruckfeder erreicht werden kann.

Um die höhenverstellbare Aufnahmeeinheit solcher Aufnahmevorrichtungen in einer gewünschten Höhe arretieren zu können, können solche Aufnahmevorrichtungen gemäß dem Stand der Technik eine Bremse aufweisen, durch die die Aufnahmeeinheit in einer gewünschten Höhe arretierbar ist. Insofern kann die Aufnahmeeinheit, insbesondere auch mittels der durch die Gasdruckfeder auf die Aufnahmeeinheit wirkenden Federkräfte, in einer gewünschten Höhe in der Balance gehalten und anschließend in dieser Höhe durch die Bremse arretiert werden.

Sofern die Gewichtskraft der Aufnahmeeinheit während der Arretierung der Bremse geändert wird, beispielsweise indem Gegenstände von der Aufnahmeeinheit entfernt oder weitere Gegenstände auf die Aufnahmeeinheit aufgelegt werden, kann dies dazu führen, dass sich die Gewichtskraft der Aufnahmeeinheit und die Federkraft der Gasdruckfeder nicht mehr in einer Balance befinden, was während der Arretierung der Bremse jedoch zunächst keinen unmittelbaren Einfluss auf die Aufnahmeeinheit hat. Nach Lösen der Bremse kann dieser Umstand jedoch dazu führen, dass die durch die Gasdruckfeder auf die Aufnahmeeinheit wirkende Federkraft entweder zu groß oder zu klein ist, um die Aufnahmeeinheit in der Balance zu halten. Bei einer Vergrößerung der Gewichtskraft der Aufnahmeeinheit durch das Hinzufügen von weiteren Gegenständen auf die Aufnahmeeinheit kann dies dazu führen, dass die Federkraft zu gering ist, um die Aufnahmeeinheit in der Balance zu halten, sodass sich die Aufnahmeeinheit nach Lösen der Bremse nach unten bewegt. Im umgekehrten Fall kann die Entfernung von Gegenständen von der Aufnahmeeinheit dazu führen, dass sich die Aufnahmeeinheit nach Lösen der Bremse nach oben bewegt. Hierdurch kann die Aufnahmeeinheit beispielsweise nicht mehr in einer gewünschten Höhe zur Verfügung gestellt werden. Im Extremfall kann dies auch dazu führen, dass die Aufnahmeeinheit durch einen Benutzer der Aufnahmevorrichtung nicht mehr in eine gewünschte Höhe verstellt werden kann. Beispielsweise kann eine solch ungewünschte Höhenverstellung der Aufnahmeeinheit nach Lösen der Bremse auch dazu führen, dass ein Benutzer der Aufnahmevorrichtung durch eine sich nach oben oder unten bewegende Aufnahmeeinheit verletzt wird.

EP20158380 A2 offenbart einen Tisch, welcher dieses Problem vermeidet.

Der Erfindung liegt die Aufgabe zugrunde, eine Aufnahmevorrichtung zur Verfügung zu stellen, die die vorbezeichneten Nachteile nicht aufweist. Insbesondere liegt der Erfindung die Aufgabe zugrunde, eine Aufnahmevorrichtung zur Verfügung zu stellen, bei der eine ungewünschte Höhenverstellung der Aufnahmeeinheit nach Lösen einer Bremse verhindert werden kann. Insbesondere liegt der Erfindung insoweit auch die Aufgabe zugrunde, eine Aufnahmevorrichtung zur Verfügung zu stellen, bei der die Verletzung des Benutzers der Aufnahmevorrichtung nach Lösen der Bremse verhindert werden kann, soweit sich während der Arretierung der Bremse die auf die Aufnahmeeinheit wirkenden Kräfte, insbesondere auch die auf die Aufnahmeeinheit wirkende Gewichtskraft, verändert haben.

Eine weitere Aufgabe der Erfindung besteht darin, ein Verfahren zum Betreiben einer solchen Aufnahmevorrichtung zur Verfügung zu stellen. Zur Lösung der Aufgabe wird erfindungsgemäß zur Verfügung gestellt eine Aufnahmevorrichtung, umfassend:
eine höhenverstellbare Aufnahmeeinheit;
wenigstens eine Gasdruckfeder, die zum Ausgleich von auf die Aufnahmeeinheit wirkenden Kräften ausgebildet ist;
eine Bremse, die zur Einnahme einer ersten Stellung und einer zweiten Stellung ausgebildet ist, wobei die Bremse in der ersten Stellung die Aufnahmeeinheit derart arretiert, dass die Aufnahmeeinheit nicht höhenverstellbar ist, und die Bremse in der zweiten Stellung die Aufnahmeeinheit nicht arretiert, so dass die Aufnahmeeinheit höhenverstellbar ist;
einen Sensor, durch den eine Messgröße bestimmbar ist, die durch auf die Aufnahmeeinheit wirkende Kräfte veränderbar ist, wenn die Bremse die erste Stellung einnimmt;
Steuermittel, durch die die Bremse zur Einnahme der ersten Stellung oder der zweiten Stellung ansteuerbar ist, wobei die Steuermittel derart eingerichtet sind, dass die Bremse durch die Steuermittel in Abhängigkeit der vom Sensor bestimmbaren Messgröße ansteuerbar ist.

Gegenstand der Erfindung ist ferner ein Verfahren zur Ansteuerung einer auf eine höhenverstellbare Aufnahmeeinheit einer Aufnahmevorrichtung wirkenden Bremse, umfassend die folgenden Merkmale:
Zur Verfügungstellung der hierin offenbarten Aufnahmevorrichtung;
Ansteuerung der Bremse durch die Steuermittel.

Erfindungsgemäß wurde erkannt, dass eine Aufnahmevorrichtung der gattungsgemäßen Art, die die vorbezeichneten Aufgaben löst, zur Verfügung gestellt werden kann, wenn diese einen Sensor umfasst, durch den eine Messgröße bestimmbar ist, die durch auf die Aufnahmeeinheit wirkende Kräfte veränderbar ist, wenn die Bremse die erste Stellung einnimmt. Dies ermöglicht es, auch bei arretierter Bremse die auf die Aufnahmeeinheit wirkenden Kräfte, insbesondere auch die auf die Aufnahmeeinheit wirkende Gewichtskraft, zu bestimmen und in Abhängigkeit davon die Aufnahmevorrichtung zu betreiben. Konkret kann die Aufnahmevorrichtung mittels eines solchen Sensors erfindungsgemäß derart betrieben werden, dass die Bremse in Abhängigkeit der vom Sensor bestimmten Messgröße ansteuerbar ist.

Erfindungsgemäß sind zur Ansteuerung der Bremse Steuermittel vorgesehen, durch die die Bremse zur Einnahme der ersten Stellung oder der zweiten Stellung ansteuerbar ist. Gemäß einem erfindungsgemäßen Kerngedanken sind die Steuermittel nunmehr derart eingerichtet, dass die Bremse durch die Steuermittel in Abhängigkeit der vom Sensor bestimmbaren Messgröße ansteuerbar ist. Dies ermöglicht es insbesondere auch, die Steuermittel derart anzusteuern, dass diese die Bremse nur in Abhängigkeit von der Messgröße in die zweite Stellung bewegen, in der die Aufnahmeeinheit höhenverstellbar ist.

Während die Bremse arretiert ist, können beispielsweise Gegenstände auf der Aufnahmeeinheit abgelegt werden. Folglich ändert sich die auf die Aufnahmeeinheit wirkende Gewichtskraft und somit auch die durch den Sensor bestimmbare Messgröße. Die Bremse wird anschließend nur in Abhängigkeit dieser vom Sensor bestimmbaren Messgröße mittels der Steuermittel in die zweite Stellung überführt.

Weiterhin wurde erfindungsgemäß erkannt, dass es vorteilhaft ist, wenn durch den Sensor eine Messgröße bestimmbar ist, wenn sich die Bremse in der ersten Stellung befindet, mithin die Aufnahmeeinheit arretiert ist. Dies gilt insbesondere dann, wenn sich bei arretierter Bremse die auf die Aufnahmeeinheit wirkenden Kräfte geändert haben. Dabei ist eine Höhenverstellung der Aufnahmeeinheit nur dann durchführbar, wenn die Bremse mittels der Steuermittel in die zweite Stellung überführt wurde. Dazu wird erfindungsgemäß die Bremse mittels der Steuermittel in Abhängigkeit der von dem Sensor bestimmbaren Messgröße angesteuert.

Insbesondere kann besonders bevorzugt vorgesehen sein, die Aufnahmevorrichtung derart auszubilden, dass die Bremse nur dann durch die Steuermittel in die zweite Stellung überführt werden kann, wenn sich die Aufnahmeeinheit in Balance befindet. Balance bedeutet, dass eine Federkraft der wenigstens einen Gasdruckfeder die ihr entgegenwirkende Gewichtskraft ausgleicht. Dabei setzt sich die Gewichtskraft insbesondere aus den wirkenden Gewichtskräften der Aufnahmeeinheit selbst, der auf oder an der Aufnahmeeinheit angeordneten Gegenstände und gegebenenfalls weiteren Komponenten der Aufnahmevorrichtung (wie im Folgenden angegeben) zusammen. Somit wird insbesondere auch sichergestellt, dass nach einem Lösen der Bremse keine Änderung der Höhe der Aufnahmeeinheit stattfinden kann, die eine die Aufnahmevorrichtung benutzende Person (nachfolgend auch "Benutzer" genannt) beeinträchtigen, insbesondere verletzen könnte. Vielmehr kann durch die erfindungsgemäße Aufnahmevorrichtung insoweit sichergestellt sein, dass sich die Aufnahmeeinheit nach dem Lösen der Bremse stets in Balance befindet. Nach dem Lösen der Bremse kann der Benutzer, insbesondere unterstützt durch die Federkraft der wenigstens einen Gasdruckfeder, die Aufnahmeeinheit in die gewünschte Höhe verstellen.

Die auf die Aufnahmeeinheit wirkenden Kräfte, durch die die durch den Sensor bestimmbare Messgröße veränderbar ist, können insbesondere zum einen die Gewichtskraft der Aufnahmeeinheit und zum anderen die Federkraft der Gasdruckfeder, die der Gewichtskraft der Aufnahmeeinheit entgegenwirkt, sein. Die Messgröße kann insoweit insbesondere eine Messgröße sein, die sich aus der, insbesondere in Vertikalrichtung auf die Aufnahmeeinheit wirkenden, zum einen von der Gewichtskraft der Aufnahmeeinheit und zum anderen von Federkraft der Gasdruckfeder, die der Gewichtskraft der Aufnahmeeinheit entgegenwirkt, resultierenden Kraft ergibt. Soweit diese resultierende Kraft "Null" ist, besteht ein Kräftegleichgewicht hinsichtlich der Gewichtskraft der Aufnahmeeinheit und der, der Gewichtskraft der Aufnahmeeinheit entgegenwirkenden Federkraft der Gasdruckfeder, womit sich die Aufnahmeeinheit in Balance befindet.

Von besonderer Bedeutung ist dabei der erfindungsgemäße Aspekt, dass bei arretierter Bremse mittels des Sensors ein solches Kräftegleichgewicht beziehungsweise eine solche Balance der Aufnahmeeinheit bestimmbar ist. Insofern wurde erfindungsgemäß erkannt, dass es notwendig ist, die auf die Aufnahmeeinheit wirkende Kraft, insbesondere die in Vertikalrichtung auf die Aufnahmeeinheit wirkende resultierende Kraft bestimmen zu können, wenn die Bremse die erste Stellung einnimmt, mithin arretiert ist. Erfindungsgemäß wurde erkannt, dass die auf die Aufnahmeeinheit wirkende Kraft, insbesondere die in Vertikalrichtung auf die Aufnahmeeinheit wirkende resultierende Kraft, bestimmt wird zum einen von der Gewichtskraft der Aufnahmeeinheit und zum anderen von Federkraft der Gasdruckfeder, die der Gewichtskraft der Aufnahmeeinheit entgegenwirkt. Ist insoweit die Gewichtskraft der Aufnahmeeinheit größer als die der Gewichtskraft der Aufnahmeeinheit entgegenwirkende Federkraft der Gasdruckfeder, resultiert hieraus eine resultierende Kraft "nach unten". Ist insoweit die Gewichtskraft der Aufnahmeeinheit kleiner als die der Gewichtskraft der Aufnahmeeinheit entgegenwirkende Federkraft der Gasdruckfeder, resultiert hieraus eine resultierende Kraft "nach oben ". Ist insoweit jedoch die Gewichtskraft der Aufnahmeeinheit genauso hoch wie die der Gewichtskraft der Aufnahmeeinheit entgegenwirkende Federkraft der Gasdruckfeder, heben sich beide Kräfte gegenseitig auf und es resultiert hieraus eine resultierende Kraft "Null". Erfindungsgemäß wurde nunmehr erkannt, dass diese, "nach oben" oder "nach unten" resultierende Kraft, also die aus der Gewichtskraft der Aufnahmeeinheit und der dieser entgegenwirkenden Federkraft der Gasdruckfeder resultierende Kraft, gegen die Bremse wirkt, wenn die Bremse die erste Stellung einnimmt. Insoweit arretiert die Bremse in der ersten Stellung die Aufnahmeeinheit gegen eine Höhenverstellung "nach oben", wenn die resultierende Kraft "nach oben" gerichtet ist, und gegen eine Höhenverstellung "nach unten", wenn die resultierende Kraft "nach unten" gerichtet ist. Ist die resultierende Kraft jedoch "Null", wirkt in der ersten Stellung der Bremse tatsächlich keine Kraft gegen die Bremse, die aus der Gewichtskraft der Aufnahmeeinheit und der dieser entgegenwirkenden Federkraft der Gasdruckfeder resultiert; eine resultierende Kraft "Null" gegen die Bremse in deren erster Stellung indiziert damit ein Kräftegleichgewicht beziehungsweise eine Balance der Aufnahmeeinheit. Auf Basis dieser erfindungsgemäßen Erkenntnis kann daher erfindungsgemäß bevorzugt vorgesehen sein, dass durch den Sensor eine Messgröße bestimmbar ist, die durch die Wirkung der sich aus der Gewichtskraft der Aufnahmeeinheit und der dieser entgegenwirkenden Federkraft der Gasdruckfeder resultierenden Kraft auf die Bremse in deren erster Stellung beeinflusst wird. Insbesondere kann diese Messgröße vorzugweise die Kraft sein, die durch diese resultierende Kraft auf die Bremse in deren erster Stellung ausgeübt wird. Wird insoweit durch den Sensor diese Kraft beispielsweise als "Null" bestimmt, indiziert dies ein Kräftegleichgewicht beziehungsweise eine Balance der Aufnahmeeinheit. Wird insoweit anderenfalls durch den Sensor diese Kraft beispielsweise als "ungleich Null" bestimmt, indiziert dies ein Kräfteungleichgewicht beziehungsweise keine Balance der Aufnahmeeinheit.

Die Aufnahmeeinheit kann grundsätzlich eine beliebige Gestalt aufweisen, beispielsweise in Form einer Tischplatte, einer Werkbank, einer Sitzvorrichtung, eines Fahrradsattels, einer Bettliegefläche, eines Kippfensters, einer Ladefläche oder einer Fernsehhalterung. Die Aufnahmevorrichtung kann einsprechend auch unterschiedlich ausgebildet sein, beispielsweise als Tischgestell, Werkbankgestell, Sitzvorrichtungsuntergestell, Fahrrad, Bettgestell, Fensterhalterung, Fahrzeugheckklappe, Laderampe oder Fernsehhalterungsgestell. Insbesondere kann die Aufnahmevorrichtung auf dem Boden abstellbar sein oder an Wänden, Decken, Autos, Gebäudeteilen oder sonstigen Gegenständen anbringbar sein. Bevorzugt ist die Aufnahmevorrichtung ein Möbelstück, besonders bevorzugt ein Tisch, und die Aufnahmeeinheit eine Tischplatte, da diese häufig mit unterschiedlichen Gegenständen beladen wird.

Die Aufnahmeeinheit weist insbesondere eine Aufnahmefläche auf. Die Aufnahmefläche kann grundsätzlich beliebig strukturiert sein, also beispielsweise eben oder profiliert ausgebildet sein. Die Aufnahmefläche, insbesondere in Form einer Tischplatte, ist insbesondere zur Aufnahme von unterschiedlichen Gegenständen ausgebildet, wie beispielsweise Büchern, Computermonitoren, Werkzeugen, Personen, Ladungen oder sonstigen Gegenständen.

Bevorzugt handelt es sich bei der Aufnahmefläche um eine Tischplatte, da diese häufig mit unterschiedlichen Beladungen beladen wird.

Eine Aufnahmeeinheit kann insbesondere vertikal, also entlang einer vertikal verlaufenden Achse höhenverstellbar sein. Besonders bevorzugt ist Aufnahmeeinheit relativ zum Boden vertikal höhenverstellbar.

Gasdruckfedern sind aus dem Stand der Technik bekannt und können verschiedene Formen und Dimensionierungen aufweisen. Die Vorteile einer solchen aus dem Stand der Technik bekannten Gasdruckfeder sind insbesondere ein geringer Platzbedarf und eine im Wesentlichen konstant zur Verfügung stellbare Federkraft. Die wenigstens eine Gasdruckfeder unterstützt insbesondere einen Benutzer bei der Höhenverstellung der Aufnahmeeinheit, indem sie die auf die Aufnahmeeinheit wirkende Gewichtskraft ausgleicht, so dass sich die Aufnahmeeinheit und die gegebenenfalls auf der Aufnahmefläche angeordneten Gegenstände in Balance befinden. Statt der Verwendung der wenigstens einen Gasdruckfeder kann auch eine andere pneumatische Feder oder eine hydraulische Feder vorgesehen sein. Auch können mehrere Federn in Reihe und/oder parallel angeordnet werden. Insbesondere kann die wenigstens eine Gasdruckfeder an mehreren Stellen auf die Aufnahmeeinheit einwirken. Auch zwischengeschaltete Kraftübertragungsmittel, wie beispielsweise eine Synchronisierungsachse oder ein Getriebe, sind denkbar.

Die Aufnahmevorrichtung weist erfindungsgemäß eine Bremse, bevorzugt eine mechanische Bremse, zur Arretierung der Aufnahmeeinheit in einer bestimmten Höhe beziehungsweise Position auf. Bevorzugt arretiert die mechanische Bremse mittels Reibschluss. In der ersten Stellung der Bremse ist die Aufnahmeeinheit arretiert. In der zweiten Stellung der Bremse ist die Aufnahmeeinheit höhenverstellbar. Die Bremse kann dabei gemäß den aus dem Stand der Technik zur Arretierung von Aufnahmeeinheiten, deren Höhenverstellbarkeit durch Gasdruckfedern unterstützt wird, bekannten Bremsen ausgebildet und für die zu erwartenden Kräfte im Einsatz der Aufnahmevorrichtung ausgelegt sein.

Weiterhin weist die Aufnahmevorrichtung den Sensor auf, welcher die Messgröße, die durch au die Aufnahmeeinheit wirkenden Kräfte veränderbar ist, bestimmen kann, auch wenn die Bremse arretiert ist beziehungsweise die erste Stellung einnimmt. Die Messgröße ist dabei eine solche Messgröße, die durch die auf die Aufnahmeeinheit wirkenden Kräften, insbesondere von den auf die Aufnahmeeinheit wirkenden Gewichtskräften, veränderbar und durch den Sensor bestimmbar ist. Dabei kann die Messgröße eine beliebige Eigenschaft, insbesondere physikalische Eigenschaft sein, die durch den Sensor als Messgröße erfassbar ist, also beispielweise elektrische Eigenschaften, Abstand, Position, Stellung, Winkel, Kraft oder Druck. Besonders bevorzugt ist die Messgröße Kraft, da diese besonders einfach und zuverlässig bestimmbar ist, beispielsweise durch einen Sensor in Form eines Kraftsensors (bzw. Kraftaufnehmers).

Die Steuermittel sind derart eingerichtet, dass durch diese die Bremse aus der ersten Stellung in die zweite Stellung überführbar ist und umgekehrt. Dabei können die Steuermittel grundsätzlich beliebige aus dem Stand der Technik zur Ansteuerung einer Bremse einer gattungsgemäßen Aufnahmevorrichtung bekannte Steuermittel sein. Beispielsweise können die Steuermittel als wenigstens ein elektrisch betriebener Aktuator oder wenigstens ein vom Benutzer bedienbares mechanisches System ausgebildet sein. Dabei ist erfindungsgemäß die Bremse durch die Steuermittel in Abhängigkeit der vom Sensor bestimmbaren Messgröße ansteuerbar. Weiterhin ist ebenfalls denkbar, dass die Steuermittel in Form eines mechanischen Systems, beispielsweise als mechanisch verstellbares Steuermittel, vorliegen. Ein solch mechanisch verstellbares Steuermittel kann dann beispielsweise nur in Abhängigkeit von der vom Sensor bestimmbaren Messgröße, insbesondere durch den Benutzer, betätigt werden.

Nach einer besonders bevorzugten Ausführungsform der Erfindung sind die Steuermittel derart eingerichtet, dass die Bremse nur zur Einnahme der zweiten Stellung ansteuerbar ist, wenn die vom Sensor bestimmbare Messgröße einem bestimmten Wert entspricht oder die Messgröße innerhalb eines bestimmten Wertebereiches liegt. Dabei ist dieser Wert oder Wertebereich, wie unten weiter ausgeführt, vorteilhafter Weise derart bestimmt, dass hierdurch die Balance der Aufnahmeeinheit indiziert ist. Damit ist durch diesen Erfindungsgedanken sichergestellt, dass sich die Aufnahmeeinheit bei einem Lösen der Bremse beziehungsweise der Einnahme der zweiten Stellung in Balance befindet. Hierdurch kann im Fall eines Lösens der Bremse für eine gewünschte Höhenverstellung der Aufnahmeeinheit eine Verletzung des Benutzers verhindert werden, da sich die Aufnahmeeinheit in diesem Fall ohne eine Höhenverstellung durch den Benutzer nicht selbsttätig in der Höhe verstellt.

Nach einer besonders bevorzugten Ausführungsform der Erfindung sind die Steuermittel derart eingerichtet, dass die Bremse nur zur Einnahme der zweiten Stellung ansteuerbar ist, wenn ein (insbesondere von der Messgröße unabhängiges) Steuersignal vorliegt. Das Steuersignal kann grundsätzlich auf beliebige Art und Weise erzeugt werden, bevorzugt jedoch in Abhängigkeit von einer vom Benutzer gewünschten Höhenverstellung der Aufnahmevorrichtung. Insbesondere kann das Steuersignal durch eine vom Benutzer ausgeübte Handlung erzeugbar sein. Beispielsweise kann eine vom Benutzer ausgeübte Handlung ein Steuersignal erzeugen, insbesondere beispielsweise in Form wenigstens eines elektrischen Signals. Zur Erzeugung des Steuersignals kann die Aufnahmevorrichtung Mittel (nachfolgend "Verstellmittel") zur Erzeugung eines solchen Steuersignals aufweisen, insbesondere wenigstens ein solches, durch einen Benutzer betätigbares Verstellmittel. Beispielsweise können solche Verstellmittel in Form von Schaltern, Sensoren, Knöpfen, Kapazitätssensoren oder sonstigen durch einen Benutzer betätigbaren Verstellmitteln vorliegen. Die Verstellmittel können insbesondere an der Aufnahmeeinheit angeordnet sein und durch deren Betätigung durch den Benutzer das Steuersignal erzeugen. Der Vorteil der Erzeugung des Steuersignals durch solche Verstellmittel liegt insbesondere auch darin, dass das Steuersignal nur im Fall der Betätigung der Verstellmittel durch den Benutzer erzeugbar ist, sodass eine etwaige, durch den Benutzer gewünschte Höhenverstellung nicht kontinuierlich festgestellt werden muss.

Nach einer Fortbildung dieses Erfindungsgedankens sind die Steuermittel derart eingerichtet, dass die Bremse nur zur Einnahme der zweiten Stellung ansteuerbar ist, wenn gleichzeitig zum Einen die vom Sensor bestimmbare Messgröße einem bestimmten Wert entspricht oder in die Messgröße innerhalb eines bestimmten Wertebereiches liegt und zum Anderen das Steuersignal vorliegt. Diese Ausführungsform hat den besonderen Vorteil, dass die Aufnahmeeinheit nur dann höhenverstellbar ist, wenn der Benutzer eine Höhenverstellung der Aufnahmeeinheit wünscht und gleichzeitig die vom Sensor bestimmbare Messgröße einem bestimmten Wert entspricht oder die Messgröße innerhalb eines bestimmten Wertebereiches liegt. Soweit dieser bestimmte Wert oder Wertebereich, wie unten im Detail ausgeführt, vorteilhafterweise derart gewählt ist, dass hierdurch die Balance der Aufnahmeeinheit indiziert ist, ist durch diesen Erfindungsgedanken sichergestellt, dass sich die Aufnahmeeinheit bei einer gewünschten Höhenverstellung durch den Benutzer stets in Balance befindet. Hierdurch kann im Fall eines Lösens der Bremse für eine gewünschte Höhenverstellung der Aufnahmeeinheit eine Verletzung des Benutzers verhindert werden, da sich die Aufnahmeeinheit in diesem Fall ohne eine Höhenverstellung durch den Benutzer nicht selbsttätig in der Höhe verstellt. Weiterhin kann es unter Sicherheitsaspekten vorteilhaft sein, wenn die Steuermittel derart eingerichtet sind, dass sie, wenn das Steuersignal nicht mehr vorliegt, die Bremse stets von der zweiten Stellung in die erste Stellung bewegen.

In einer weiteren Ausführungsform der Erfindung ist die Aufnahmeeinrichtung derart ausgebildet, dass die von dem Sensor bestimmbare Messgröße von den auf die Aufnahmeeinheit wirkenden Kräften abhängt. Wenn beispielsweise Gegenstände auf die Aufnahmeeinheit gelegt oder von dieser entfernt werden, ändert sich die von der Aufnahmeeinheit ausgeübte Gewichtskraft und mithin auch die Messgröße, insbesondere auch bei arretierter Bremse. Dabei ist es insbesondere vorteilhaft, dass die auf die Aufnahmeeinheit wirkenden Kräfte direkt durch den Sensor bestimmbar sind. Insbesondere kann auf diese Weise eine Balance der Aufnahmeeinheit festgestellt werden, ohne zwei Messgrößen mit einander vergleichen zu müssen.

In einer weiteren Ausführungsform der Erfindung ist die Aufnahmeeinrichtung derart ausgebildet, dass die vom Sensor bestimmbare Messgröße von der resultierenden Kraft von wenigstens zwei auf die Aufnahmeeinheit wirkenden Kräften abhängt. Insbesondere hängt die Messgröße von mindestens zwei Kräften ab, die auf die Aufnahmeeinheit wirken. Dabei wirkt die Gewichtskraft der Aufnahmeeinheit der von der wenigstens einen Gasdruckfeder erzeugten Kraft entgegen. Die Aufnahmevorrichtung ist nunmehr derart ausgebildet, dass die vom Sensor bestimmbare Messgröße die auf Grund dieser entgegenwirkenden Kräfte resultierende Kraft darstellt. Auf Grundlage dieser Messgröße ist eine Balance der Aufnahmeeinheit feststellbar. Auch kann auf Grundlage einer solchen Messgröße beispielsweise erfasst werden, welche Kraft in einem solchen Ungleichgewichtszustand in Bezug auf den Sensor größer ist. Vorteilhaft ist dabei insbesondere, dass die Messgröße direkt Rückschlüsse auf die wirkenden Kräfte erlaubt. Insbesondere werden keine zwei Sensoren benötigt, um die auf die Aufnahmeeinheit wirkenden Kräfte bestimmen zu können. Zudem kann der Sensor somit relativ zu den wirkenden Kräften die absolute Messgröße bestimmen. Somit ist kein Vergleich von zwei absoluten Werten von zwei Sensoren notwendig.

In einer weiteren Ausführungsform der Erfindung ist vorgesehen, dass die wenigstens eine Gasdruckfeder eine auf die Aufnahmeeinheit wirkende Federkraft bereitstellt. Dabei kann die Federkraft direkt und/oder indirekt auf die Aufnahmeeinheit wirken. Insbesondere ist denkbar, dass die Federkraft an unterschiedlichen Punkten auf die Aufnahmeeinheit einwirkt, um vorteilhaft eine technisch sinnvolle Krafteinwirkung zu erzielen. Weiterhin kann die Federkraft auch mittels einer Synchronisationseinheit auf die Aufnahmeeinheit übertragen werden, so dass vorteilhaft eine Krafteinwirkung gleichmäßig an unterschiedlichen Positionen der Aufnahmeeinheit ermöglicht wird. Die Federkraft wirkt insbesondere der resultierenden Gewichtskraft der Aufnahmeeinheit entgegen. Wenn die Bremse die erste Stellung einnimmt, wirkt die sich aus der Gewichtskraft der Aufnahmeeinheit und der dieser entgegenwirkenden die Federkraft der Gasdruckfeder resultierende Kraft gegen die Bremse.

In einer weiteren besonders bevorzugten Ausführungsform der Erfindung ist vorgesehen, dass die Federkraft der wenigstens einen Gasdruckfeder veränderbar ist. Auf diese Weise kann vorteilhaft die Federkraft an die von der Aufnahmeeinheit wirkende Gewichtskraft angepasst werden, folglich auch eine Balance hergestellt werden. Dabei soll die Federkraft vorzugsweise derart veränderbar sein, dass die wenigstens eine Gasdruckfeder durch die Federkraft die ihr entgegenwirkende Gewichtskraft der Aufnahmeeinheit ausgleicht. Hierdurch ist ausschließbar, dass es beim Überführen der Bremse in die zweite Stellung nicht zu einem unkontrollierten Absinken oder Aufsteigen der Aufnahmeeinheit kommt.

Für die Änderung der Federkraft der wenigstens einen Gasdruckfeder kann der Fachmann grundsätzlich auf sämtliche aus dem Stand der Technik bekannte Maßnahmen zurückgreifen. Bekanntermaßen handelt es sich bei einer Gasdruckfeder um eine pneumatische Feder, die unter Überdruck stehendes Gas zur Bereitstellung einer Federkraft nutzt. Gasdruckfedern umfassen regelmäßig einen Zylinder, in dem eine Druckgaskammer ausgebildet ist, einen in der Druckgaskammer beweglichen Kolben und ein in der Druckgaskamme unter Überdruck befindliches Gas, das den Gasdruck auf den Kolben überträgt. Durch den Überdruck des Gases wird die auf den Kolben übertragene Kraft und damit die Federkraft der Gasdruckfeder bestimmt. Beispielsweise ist eine Änderung der Federkraft damit dadurch erzeugbar, dass das Raumvolumens der Druckgaskammer verändert wird. Dabei kann beispielsweise ein weiterer Kolben das Raumvolumen verringern oder vergrößern, um entsprechend einen in der Druckgaskammer herrschenden Arbeitsdruck zu verringern oder zu vergrößern. Entsprechend ändert sich dann auch die Federkraft der wenigstens einen Gasdruckfeder. Eine weitere Möglichkeit zur Änderung der Federkraft besteht in der Änderung der Druckgasmenge in der Druckgaskammer der wenigstens einen Gasdruckfeder. Für eine Erhöhung der Federkraft wird dann beispielsweise Gas in die Gasdruckkammer der wenigstens einen Gasdruckfeder geleitet und folglich die Federkraft erhöht. Für eine Verringerung der Federkraft wird dann beispielsweise Gas aus der Gasdruckkammer der wenigstens einen Gasdruckfeder geleitet und folglich die Federkraft verringert.

In einer weiteren besonders bevorzugten Ausführungsform der Erfindung ist vorgesehen, dass die Federkraft in Abhängigkeit der vom Sensor bestimmbaren Messgröße veränderbar ist. Dabei kann insbesondere vorgesehen sein, dass die Federkraft in Abhängigkeit der durch den Sensor bestimmbaren Messgröße veränderbar ist. Auf diese Weise kann die Federkraft vorteilhaft in Abhängigkeit von der Messgröße bei arretierter Bremse, also in der ersten Stellung, verändert werden, insbesondere derart verändert werden, dass die Federkraft in der ersten Stellung der Bremse die Gewichtskraft der Aufnahmeeinheit ausgleicht und die Aufnahmeeinheit daher bei einem anschließenden Lösen der Bremse in de Balance hält.

In einer weiteren besonders bevorzugten Ausführungsform der Erfindung ist vorgesehen, dass die Federkraft nur dann veränderbar ist, wenn die Bremse die erste Stellung einnimmt. Das heißt, dass nur bei arretierter Bremse beziehungsweise bei einer in der Höhe fixierten Aufnahmeeinheit die Federkraft veränderbar ist. Auf diese Weise wird insbesondere die Sicherheit bei der Bedienung durch den Benutzer erhöht. Insbesondere wird vor dem Überführen der Bremse in die zweite Stellung die Messgröße überprüft. Wenn auf Grundlage der Messgröße eine Balance festgestellt wird, kann die Bremse in die zweite Stellung überführt werden. Wenn keine Balance feststellbar ist, kann die Bremse nicht in die zweite Stellung überführt werden, und es wird vorzugsweise die Federkraft derart verändert, dass eine Balance vorliegt.

In einer weiteren besonders bevorzugten Ausführungsform der Erfindung ist vorgesehen, dass die Federkraft durch Stellmittel veränderbar ist. Die Stellmittel sind beispielsweise Aktuatoren oder sonstige Mittel, insbesondere auch durch einen Benutzer betätigbare sonstige Mittel, durch die die Federkraft der wenigstens einen Gasdruckfeder veränderbar ist. Vorteilhaft kann auf Grundlage der Messgröße direkt die gewünschte Federkraft durch die Stellmittel verändert werden. Insbesondere sind die Stellmittel auf Grundlage der vom Sensor bestimmbaren Messgröße ansteuerbar.

In einer weiteren besonders bevorzugten Ausführungsform der Erfindung ist vorgesehen, dass die Steuermittel und/oder die Stellmittel von einer elektronischen Datenverarbeitungsvorrichtung ansteuerbar sind. Insbesondere ist eine Ansteuerung der Steuermittel und/oder der Stellmittel durch die elektronische Datenverarbeitungsvorrichtung (im Folgenden auch "EDV" genannt) auf Grundlage der vom Sensor bestimmbaren Messgröße vorgesehen. Die EDV kann beispielsweise in Form eines Computers oder Microcontrollers vorliegen. Die EDV kann einen elektronischen Datenspeicher umfassen, wobei der bestimmte Wert und/oder der bestimmte Wertebereich in dem Datenspeicher gespeichert sein können.

Weiterhin kann vorgesehen sein, dass die Aufnahmevorrichtung derart ausgebildet ist, dass die vom Sensor bestimmbare Messgröße an die EDV übermittelbar und von der EDV verarbeitbar ist. Um die Steuermittel in Abhängigkeit von der Messegröße ansteuern zu können, ist die EDV derart ausgebildet, dass durch diese die Messgröße erfassbar, verarbeitbar und auf dieser Grundlage die Stell- und/oder Steuermittel ansteuerbar sind. Insbesondere ist die EDV bevorzugt derart ausgebildet, dass durch diese die erfassbare Messgröße mit dem - insbesondere im Datenspeicher gespeicherten - bestimmten Wert und/oder Wertebereich vergleichbar und auf Grundlage des Ergebnisses dieses Vergleichs die Stell- und/oder Steuermittel ansteuerbar sind. Dabei kann die EDV derart ausgebildet sein, dass sie auf Grundlage des Ergebnisses dieses Vergleichs ein Stellsignal an die Steuermittel übermittelt, durch das diese die Bremse zur Einnahme der ersten oder der zweiten Stellung ansteuern. Insoweit ist gemäß einer besonders bevorzugten Ausführungsform der Erfindung vorgesehen, die EDV derart auszubilden, dass diese nur dann ein Stellsignal zur Ansteuerung der Stellmittel zur Einnahme der zweiten Stellung der Bremse an die Steuermittel übermittelt, wenn auf Grundlage des Ergebnisses dieses Vergleichs die Messgröße dem bestimmten Wert entspricht und/oder innerhalb des bestimmten Wertebereiches liegt.

Entsprechend kann in Hinblick auf das Steuersignal vorgesehen sein, dass die Aufnahmevorrichtung derart ausgebildet ist, dass das erzeugte Steuersignal an die EDV übermittelbar und von der EDV verarbeitbar ist. Um die Steuermittel in Abhängigkeit vom Steuersignal ansteuern zu können, ist die EDV derart ausgebildet, dass durch diese das Steuersignal erfassbar, verarbeitbar und auf dieser Grundlage die Stell- und/oder Steuermittel ansteuerbar sind. Dabei kann die EDV derart ausgebildet sein, dass sie auf Grundlage des Steuersignals ein Stellsignal an die Steuermittel übermittelt, durch das diese die Bremse zur Einnahme der ersten oder der zweiten Stellung ansteuern.

Nach einer bevorzugten Fortbildung dieses Erfindungsgedankens ist vorgesehen, dass die Steuermittel derart eingerichtet sind, dass die Bremse nur zur Einnahme der zweiten Stellung angesteuert wird, wenn zum Einen die vom Sensor bestimmbare Messgröße einem bestimmten Wert entspricht oder in die Messgröße innerhalb eines bestimmten Wertebereiches liegt, und zum Weiteren gleichzeitig das Steuersignal vorliegt. Auf diese Weise kann bei einer Höhenverstellung sichergestellt werden, dass die Bremse nur in die zweite Stellung durch die Steuermittel überführt werden kann, wenn die Aufnahmevorrichtung sich in Balance befindet und insbesondere gleichzeitig eine Höhenverstellung durch den Benutzer gewünscht ist. Hierdurch kann die Sicherheit des Benutzers der Aufnahmevorrichtung weiter erhöht werden.

Insoweit ist gemäß einer besonders bevorzugten Ausführungsform der Erfindung vorgesehen, die EDV derart auszubilden, dass diese nur dann ein Stellsignal zur Ansteuerung der Stellmittel zur Einnahme der zweiten Stellung der Bremse an die Steuermittel übermittelt, wenn durch die EDV zum Einen (nach einem Vergleich der Messgröße mit dem bestimmten Wert und/oder Wertebereich) die Messgröße als dem bestimmten Wert entsprechend und/oder innerhalb des bestimmten Wertebereiches liegend bestimmt worden ist und zum Weiteren gleichzeitig das (von den Verstellmitteln erzeugte) Steuersignals an die Steuermittel übermittelt wird.

Weitere Merkmale der Erfindung ergeben sich aus den Ansprüchen, dem in den Figuren dargestellten Ausführungsbeispiel der Erfindung, sowie der zugehörigen Figurenbeschreibung.

Sämtliche Merkmale der Erfindung können, einzeln oder in Kombination, beliebig miteinander kombiniert sein.

In den Figuren zeigt schematisch:
- Figur 1: ein Ausführungsbeispiel einer erfindungsgemäßen Aufnahmevorrichtung,
- Figur 2: eine beispielhafte Ausführungsform einer Bremse
- Figur 3: eine Seitenansicht der Bremse gemäß Figur 2 in der zweiten Stellung, und
- Figur 4: eine Seitenansicht der Bremse gemäß Figur 2 in der ersten Stellung mit einer beispielhaften Ausführungsform des Sensors.

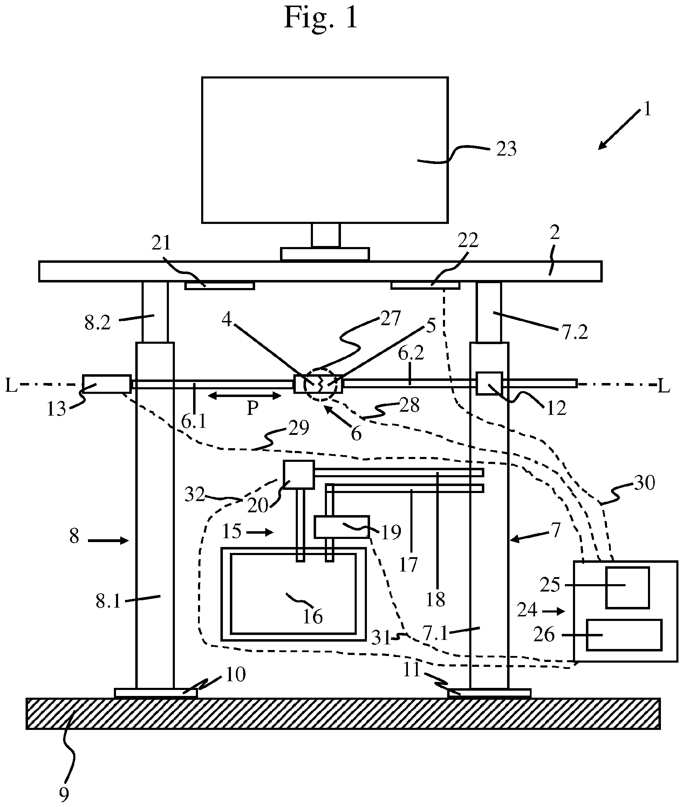

In Figur 1 ist ein Ausführungsbeispiel einer erfindungsgemäßen Aufnahmevorrichtung 1 dargestellt, die in ihrer Gesamtheit mit dem Bezugszeichen 1 gekennzeichnet ist. Die Aufnahmevorrichtung 1 ist beispielhaft in Form eines Tisches ausgebildet. Dabei weist die Aufnahmevorrichtung 1 eine höhenverstellbare Aufnahmeeinheit 2 in Form einer höhenverstellbaren Tischplatte 2 auf.

Die Aufnahmeeinheit 2 ist über zwei Tischbeine 7, 8 auf einem Untergrund 9 aufgestellt. Unterseitig weisen die Tischbeine 7, 8 jeweils eine Fußplatte 10, 11 auf, über die die Tischbeine kippfest auf dem Untergrund 9 aufstehen.

Das (in Figur 1 rechte) Tischbein 7 ist als Gasdruckfeder 7 ausgebildet und umfasst einen auf der Fußplatte 11 befestigten Zylinder 7.1, der eine in dem Zylinder 7.1 ausgebildete Druckgaskammer definiert, und einen in dem Zylinder 7.1 vertikal bewegbar angeordneten Kolben 7.2. Insoweit entspricht die Gasdruckfeder 7 einer aus dem Stand der Technik bekannten Gasdruckfeder zur Höhenverstellbarkeit von Möbeln.

Das (in Figur 1 linke) Tischbein 8 ist teleskopierbar ausgebildet und umfasst eine auf der Fußplatte 10 befestigte Hülse 8.1, in der eine vertikal bewegbare Hülse 8.2 angeordnet ist.

Die als Tischplatte ausgebildete Aufnahmeeinheit 2 ist unterseitig mit dem oberen Ende der Hülse 8.2 des Tischbeins 8 sowie mit dem oberen Ende des Kolbens 7.2 der Gasdruckfeder 7 verbunden. Insoweit ist die Aufnahmeeinheit 2 höhenverstellbar über die beiden Tischbeine 7, 8 auf dem Untergrund 9 angeordnet.

Zur Arretierung der Höhenverstellbarkeit der Aufnahmeeinheit 2 weist die Aufnahmevorrichtung eine Bremse 6 auf. Die Bremse 6 umfasst einen ersten, stabförmigen Abschnitt 6.1, der an der Hülse 8.1 befestigt ist und sich entlang einer Längsachse L in Richtung auf den Zylinder 7.1 der Gasdruckfeder 7 auf diesen zu erstreckt. Der erste Abschnitt 6.1 der Bremse 6 ist drehfest zur Längsachse L und längsverschieblich entlang der Längsachse L, angedeutet durch den Doppelpfeil P, an der Hülse 8.1 angeordnet. Die Bremse 6 umfasst ferner einen zweiten, stabförmigen Abschnitt 6.2, der am Zylinder 7.1 befestigt ist und sich entlang der Längsachse L in Richtung auf die Hülse 8.1 zu erstreckt. Der zweite Abschnitt 6.2 der Bremse 6 ist drehbar um die Längsachse L und nicht längsverschieblich entlang der Längsachse L am Zylinder 7.1 angeordnet. Der zweite Abschnitt 6.2 steht über ein Getriebe 12 in Verbindung mit dem Kolben 7.2 der Gasdruckfeder 7. Das Getriebe 12 ist derart ausgeführt, dass eine Vertikalbewegung des Kolbens 7.2 eine Drehbewegung des zweiten Abschnitts 6.2 um die Längsachse L beziehungsweise eine Drehbewegung des zweiten Abschnitts 6.2 um die Längsachse L eine Vertikalbewegung des Kolbens 7.2 bewirkt. Entsprechend ist die Vertikalbewegung des Kolbens 7.2 arretiert, wenn die Drehbewegung des zweiten Abschnitts 6.2 um die Längsachse L arretiert ist. Das Getriebe 12 kann beispielsweise als Zahnstangenantrieb (nicht dargestellt) ausgebildet sein, wobei ein an dem zweiten Abschnitt 6.2 ausgebildetes, um die Längsachse L drehbares und verdrehfest zum zweiten Abschnitt 6.2 angeordnetes Ritzel in eine am Kolben 7.2 ausgebildete Zahnstange greift.

Der erste Abschnitt 6.1 weist an seinem dem zweiten Abschnitt 6.2 zugewandten Ende erste Eingriffsmittel 4 und der zweite Abschnitt 6.2 an seinem dem ersten Abschnitt 6.1 zugewandten Ende zweite Eingriffsmittel 5 auf. Die ersten und zweiten Eingriffsmittel 4, 5 sind derart dimensioniert, dass die ersten Eingriffsmittel 4 derart in die zweiten Eingriffsmittel 5 eingreifen können, dass hierdurch eine Drehbewegung des zweiten Abschnitts 6.2 um die Längsachse L nicht möglich ist. Die Aufnahmevorrichtung 1 umfasst ein Steuermittel in Form eines elektrisch antreibbaren Aktuators 13, über den der erste Abschnitt 6.1 der Bremse 6 entlang der Längsachse L verschiebbar ist. Dabei ist der erste Abschnitt 6.1 der Bremse 6 durch den Aktuator 13 entlang der Längsachse L in eine erste Position verschiebbar, in der die ersten Eingriffsmittel 4 derart in die zweiten Eingriffsmittel 5 eingreifen, dass hierdurch eine Drehbewegung des zweiten Abschnitts 6.2 um die Längsachse L nicht möglich ist. Ferner ist der erste Abschnitt 6.1 der Bremse 6 durch den Aktuator 13 entlang der Längsachse L in eine zweite Position verschiebbar, in der die ersten Eingriffsmittel 4 nicht in die zweiten Eingriffsmittel 5 eingreifen, so dass eine Drehbewegung des zweiten Abschnitts 6.2 um die Längsachse L möglich ist.

An der Bremse 6 ist ein Sensor 27 in Form eines Drucksensors derart an dem ersten Eingriffsmitteln 4 angeordnet, dass durch diesen eine Messgröße in Form einer Kraft messbar ist, die ihrer Höhe nach der Kraft entspricht, die die zweiten Eingriffsmittel 5 auf die ersten Eingriffsmittel 4 ausüben.

Die Aufnahmevorrichtung 1 weist ein Stellmittel 15 zur Veränderung der Federkraft der Gasdruckfeder 7 auf. Die Stellmittel 15 sind der Übersichtlichkeit halber zwischen den beiden Tischbeinen 7, 8 dargestellt. Bevorzugt sind die Stellmittel 15 jedoch in dem Tisch 1 verbaut. In dem Ausführungsbeispiel umfasst dieses Stellmittel 15 einen mit Gas gefüllten Gastank 16, welcher über Leitmittel in Form von zwei fluidführenden Schläuchen 17, 18 mit der Gasdruckkammer im Zylinder 7.1 der Gasdruckfeder 7 verbunden ist. Der Schlauch 18 ist über ein Ventil 20 absperrbar. Der Schlauch 17 ist an einen Ventilator 19 gekoppelt, über den Gas durch den Schlauch 19 förderbar ist. Das Gas im Gastank 16 steht dabei vorzugsweise stets unter einem höheren Druck als der Druck, der auf das Gas im Zylinder 7.1 wirkt. Um die Federkraft der Gasdruckfeder 7 zu erhöhen, wird Gas (bei abgeschaltetem Ventilator 19) vom Gastank 16 durch das Öffnen des Ventiles 20 durch den Schlauch 18 in die Gasdruckkammer des Zylinders 7.1 geleitet. Folglich erhöht sich der in der Druckgaskammer herrschende Druck somit auch die durch die Gasdruckfeder 7 bereitgestellte Federkraft. Um die Federkraft zu verringern, wird (bei geschlossenem Ventil 20) Gas durch das Betreiben des Ventilators 19 aus der Druckgaskammer über den Schlauch 17 in den Gastank 10 geleitet. Folglich verringert sich der in der Druckgaskammer herrschende Druck und somit auch die durch die Gasdruckfeder 7 bereitgestellte Federkraft. Der Gastank 16, die Leitmittel (fluidführende Schläuche 17, 18), das Ventil 12 und der Kompressor 13 bilden dabei die Stellmittel 15.

Die Aufnahmevorrichtung 1 umfasst ferner Verstellmittel 21, 22 zur Erzeugung eines Steuersignals. Die Verstellmittel 21, 22 sind durch zwei unter der Aufnahmeeinheit 2 angeordnete, voneinander beabstandete Kapazitätssensoren bereitgestellt. Bei einem gleichzeitigen Berühren beider Kapazitätssensoren 21, 22 durch einen Benutzer der Aufnahmevorrichtung wird dabei ein Steuersignal erzeugt.

Auf der Aufnahmeeinheit 2 ist ein Gegenstand 23 in Form eines Computermonitors abgestellt. Die von der Aufnahmeeinheit 2 ausgeübte Gewichtskraft wird im Wesentlichen bestimmt von der Gewichtskraft der Aufnahmeeinheit 2 selbst, dem Computermonitor 23 und den sonstigen an der Aufnahmeeinheit 2 angeordneten Elementen, insbesondere den Verstellmitteln 21, 22 sowie den Elementen zur Verbindung der Aufnahmeeinheit 2 mit dem Kolben 7.2 und der Hülse 8.2.

Die Aufnahmevorrichtung 1 umfasst ferner eine elektronische Datenverarbeitungsvorrichtung (EDV) 24 in Form eines Microcontrollers. Die EDV 24 umfasst einen elektronischen Datenspeicher 25 und einen Prozessor 26. Im Datenspeicher 25 ist ein bestimmter Wertebereich gespeichert. Die EDV 24 ist der Übersichtlichkeit halber neben der dem Tisch 1 angeordnet. Bevorzugt wird die EDV 24 jedoch in dem Tisch 1 verbaut.

Die EDV 24 ist über ein Datenkabel 28 mit dem Sensor 27 verbunden. Über das Datenkabel 28 ist eine vom Sensor 27 bestimmte Messgröße, also die Größe einer Kraft, in Form eines elektrischen Signals an die EDV 24 übertragbar.

Die EDV 24 ist ferner über ein Datenkabel 29 mit dem Aktuator 13 verbunden. Über das Datenkabel 29 ist ein Steuersignal an den Aktuator 13 übertragbar, das den Aktuator 13 veranlasst, den ersten Abschnitt 6.1 der Bremse 6 entlang der Längsachse L in die erste Position (in der die ersten Eingriffsmittel 4 derart in die zweiten Eingriffsmittel 5 eingreifen, dass hierdurch eine Drehbewegung des zweiten Abschnitts 6.2 um die Längsachse L nicht möglich ist) oder in die zweite Position (in der die ersten Eingriffsmittel 4 nicht in die zweiten Eingriffsmittel 5 eingreifen) zu verschieben.

Ferner ist die EDV 24 über ein Datenkabel 30 derart mit den Verstellmitteln 21, 22 verbunden, dass über das Datenkabel 29 ein von einem Benutzer durch das gleichzeitige Berühren der Verstellmitteln 21, 22 erzeugtes Steuersignal an die EDV 24 übertragbar ist.

Über ein Datenkabel 31 ist die EDV 24 derart mit dem Ventil 20 verbunden, dass die EDV 24 ein Steuersignal zum Öffnen oder Schließen des Ventils 20 an dieses übertragen kann.

Schließlich ist die EDV 24 über ein Datenkabel 31 derart mit dem Ventilator 19 verbunden, dass die EDV 24 ein Steuersignal zum Starten oder Stoppen des Ventilators 19 an diesen übertragen kann.

Die EDV 24 ist derart ausgebildet, dass diese mittels des Prozessors 26 das über Datenkabel 28 vom Sensor 27 empfangene Signal und das über das Datenkabel 30 empfangene Steuersignal verarbeiten kann. Ferner ist die EDV derart ausgebildet, dass die EDV 24 das vom Sensor 27 empfangene Signal mit dem im Datenspeicher 25 gespeicherten Wertebereich vergleichen kann. Ferner ist die EDV 24 derart ausgebildet, dass sie (wie unten ausgeführt) in Abhängigkeit von diesem Vergleich das Ventil 20 über das Datenkabel 32 und den Ventilator 19 über das Datenkabel 31 ansteuern kann. Schließlich ist die EDV 24 derart ausgebildet, dass sie (wie unten ausgeführt) in Abhängigkeit von diesem Vergleich sowie vom Steuersignal ein Stellsignal an den Aktuator 13 übertagen werden kann.

Beim Betreiben der Aufnahmevorrichtung 1 kommt es zu unterschiedlichen Belastungszuständen und die Höhenverstellung der Aufnahmeeinheit 2 gestaltet sich entsprechend unterschiedlich.

In einem ersten Fall befindet sich die Aufnahmeeinheit 2 in Balance und es ist kein Computermonitor 23 auf der Aufnahmeeinheit 2 angeordnet. Die der Federkraft der Gasdruckfeder 7 entgegenwirkende Gewichtskraft der Aufnahmeeinheit 2 und die Federkraft gleichen sich aus. Die Bremse 6 befindet sich in der ersten Stellung und der erste Abschnitt 6.1 und der zweite Abschnitt 6.2 stehen über die Eingriffsmittel 4, 5 in Verbindung.

Wenn der Benutzer nun die Aufnahmeeinheit 2 der Höhe nach verstellen möchte, berührt er zunächst die Kapazitätssensoren 21, 22. In Folge dessen wird ein Steuersignal erzeugt und an die EDV 24 über das Datenkabel 30 übertragen. Die EDV 24 empfängt ferner die aktuell vom Sensor 27 bestimmte Messgröße in Form des Signals über das Datenkabel 28 und verarbeitet das Signal im Prozessor 26. Das Verarbeiten des Signals bedeutet insbesondere das Vergleichen der dem Signal entsprechednen, vom Sensor 27 gemessenen Messgröße mit dem im Datenspeicher 25 der EDV 24 hinterlegten Wertebereich. Die EDV 24 überprüft dabei, ob der Wert der Messgröße innerhalb des in dem Datenspeicher 25 gespeicherten Wertebereiches liegt. Im vorliegenden Fall befindet sich die Aufnahmeeinheit 2 in Balance und der Wert der Messgröße mithin innerhalb des im Datenspeicher 25 hinterlegten Wertebereiches. Somit kann die EDV 24 nunmehr feststellen, dass sich die Aufnahmeeinheit 2 in Balance befindet. Gleichzeitig wird das Steuersignal an die EDV 24 übermittelt. Da die EDV 24 eine Balance feststellt und gleichzeitig das Steuersignal vorliegt, übermittelt die EDV 24 über das Datenkabel 29 ein Stellsignal zum Überführen der Bremse 6 in die zweite Stellung an den Aktuator 13. Dabei wird durch den Aktuator 13 der erste Abschnitt 6.1 entlang der Längsachse L (in Figur 1 nach links) verschoben, so dass das Eingriffsmittel 4 aus dem Eingriffsmittel 5 "gezogen" werden, mithin die Eingriffsmittel 4, 5 nicht mehr ineinandergreifen und sich der erste Abschnitt somit in der zweiten Position befindet. Der zweite Abschnitt 6.2 ist nunmehr nicht mehr arretiert und eine Drehbewegung des zweiten Abschnitte 6.2 um die Längsachse L ist möglich. Der mit dem Kolben 7.2 der Gasdruckfeder 7 in Verbindung stehende zweite Abschnitt 6.2 dreht sich nunmehr um die Längsachse L bei einer Vertikalbewegung des Kolbens 7.2 mit. Das Getriebe 12 gibt dabei die Drehbewegung vor. Der Benutzer kann nun die in Balance befindliche Aufnahmeeinheit 2 in eine gewünschte Höhe verstellen. In der zweiten Position des ersten Abschnitts 6.1 der Bremse 6 befindet sich diese damit in der zweiten Stellung. Die vertikal bewegbare Hülse 8.2 bewegt sich bei der Höhenverstellung in der befestigten Hülse 8.1 entsprechend mit. Zur Verstellung der Höhe der Aufnahmeeinheit 2 muss der Benutzer folglich nur die notwendigen Beschleunigungskräfte nach oben oder nach untern bewirken, da die Gewichtskraft von der Federkraft der Gasdruckfeder 7 ausgeglichen wird. Die Höhenverstellung der Aufnahmeeinheit 2 ist folglich äußerst einfach für den Benutzer durchführbar und mit wenig Kraftaufwand zu bewerkstelligen.

In der gewünschten Höhe lässt der Benutzer die Aufnahmeeinheit 2 beziehungsweise die Kapazitätssensoren 21, 22 los. Dadurch wird das Steuersignal nicht mehr erzeugt und an die EDV 24 über das Datenkabel 30 übertragen. In Folge dessen steuert die EDV 24 den Aktuator 13 zum Überführen der Bremse 6 in die erste Stellung über das Datenkabel 29 an, da kein Steuersignal (auf Grund des fehelenden Verstellsignals) erzeugt wird. Hierzu wird der Abschnitt 6.2 durch den Aktuator 13 entlang der Längsachse L (in Figur 1 nach rechts) in die erste Position verschoben, so dass das erste Eingriffsmittel 4 des ersten Abschnitts 6.1 und das zweite Eingriffsmittel 5 des zweiten Abschnittes 6.2 ineinandergreifen. Eine Drehbewegung um die Längsachse L des zweiten Abschnittes 6.2 ist folglich nicht länger möglich und die Aufnahmeeinheit 2 ist durch die Bremse 6 in der gewünschten Höhe arretiert.

Ausgehend von dem beschriebenen ersten Fall wird nun der ein zweiter Fall beschrieben, in welchem der Computermonitor 13 auf der Aufnahmeeinheit 2 abgestellt wird und somit durch das hinzugefügte Gewicht keine Balance mehr vorliegt.

Die Bremse 6 befindet sich weiterhin in der ersten Stellung und arretiert die Aufnahmeeinheit 2 in einer bestimmten Höhe. Die Gewichtskraft der Aufnahmeeinheit 2 und die Federkraft der Gasdruckfeder 7 gleichen sich in diesem Fall nicht aus. Vielmehr ist die Gewichtskraft, welche der Federkraft entgegenwirkt, betragsmäßig um das Eigengewicht des Computermonitors 23 größer.

Wenn der Benutzer nun die Aufnahmeeinheit 2 der Höhe nach verstellen möchte, berührt er zunächst die Kapazitätssensoren 21, 22. In Folge dessen wird wiederum ein Steuersignal erzeugt und an die EDV 24 über das Datenkabel 30 übertragen. Die EDV 24 empfängt nun die aktuell vom Sensor 27 bestimmte Messgröße in Form des Signals über das Datenkabel 28 und verarbeitet das Signal im Prozessor 26. Das Verarbeiten des Signals bedeutet insbesondere das Vergleichen des Signals, das der vom Sensor 27 gemessenen Messgröße entspricht, dahingehend, ob dieses innerhalb des im Datenspeicher 25 gespeicherten Wertebereiches liegt. Im beschriebenen Fall befindet sich die Aufnahmeeinheit 2 nicht in Balance, so dass die vom Sensor 27 bestimmte Messgröße ein Signal erzeugt, das außerhalb des im Datenspeicher 25 gespeicherten Wertebereiches liegt. Somit kann die EDV 24 nunmehr feststellen, dass sich die Aufnahmeeinheit 2 nicht in Balance befindet. Daher sendet die EDV 24 zunächst kein Stellsignal zum Überführen der Bremse 6 in die zweite Stellung an den Aktuator 13.

Die EDV 24 kann auf Grundlage des Vergleichens der Messgröße mit dem im Speicher 25 hinterlegten Wertebereich feststellen, ob die der Gewichtskraft entgegengerichtete Federkraft der Gasdruckfeder 7 betragsmäßig kleiner ober betragsmäßig größer ist als die Gewichtskraft. Wenn die Messgröße oberhalb des Wertebereiches liegt, ist die Federkraft der Gasdruckfeder 7 betragsmäßig kleiner als die Gewichtskraft. Wenn die Messgröße unterhalb des Wertebereiches liegt, ist die Federkraft der Gasdruckfeder größer als die ihr entgegengerichtete Gewichtskraft. Im vorliegenden Fall ist durch das Abstellen des Computermonitors 23 die Federkraft zu gering um die Gewichtskraft auszugleichen. Der Messwert liegt somit oberhalb des Wertebereichs.

Die EDV 24 sendet über das Datenkabel 32 daher nun so lange ein Signal zum Öffnen des Ventils 20 an das Ventil 20, bis die die Federkraft die ihr entgegenwirkende Gewichtskraft wieder ausgleicht, sich die Aufnahmeeinheit 2 damit in Balance befindet und die vom Sensor 27 bestimmte Messgröße entsprechend ein Signal erzeugt, das innerhalb des im Datenspeicher 25 hinterlegten Wertebereiches liegt. Anschließend steuert die EDV 24 das Ventil 20 zum Schließen an.

Weiterhin liegt das Verstellsignal durch das Berühren der Kapazitätssensoren 21, 22 durch den Benutzer vor und die EDV 24 stellt auf Grundlage des vom Sensor 27 übermittelten Signals fest, dass sich die Aufnahmeeinheit 2 in Balance befindet. Somit liegen die gleichen Gegebenheiten wie in dem zuvor beschriebenen ersten Fall vor, so dass die Bremse 6 in die zweite Stellung bewegt und eine Höhenverstellung der Aufnahmeeinheit 2 wie im oben beschrieben ersten Fall durch den Benutzer durchgeführt werden kann.

Ausgehend von dem beschriebenen zweiten Fall wird nun ein dritter Fall beschrieben, in welchem der Computermonitor 23 von der Aufnahmeeinheit 2 entfernt wird und somit durch das nicht mehr vorhandene Gewicht keine Balance mehr vorliegt.

Die Bremse 6 befindet sich in der ersten Stellung und arretiert die Aufnahmeeinheit 2 in einer bestimmten Höhe. Die Gewichtskraft der Aufnahmeeinheit 2 und die Federkraft der Gasdruckfeder 7 gleichen sich in diesem Fall nicht aus. Vielmehr ist die Gewichtskraft, welche der Federkraft entgegenwirkt, betragsmäßig um das Eigengewicht des Computermonitors 23 kleiner.

Wenn der Benutzer nun die Aufnahmeeinheit 2 der Höhe nach verstellen möchte, berührt er zunächst die Kapazitätssensoren 21, 22. In Folge dessen wird wiederum ein Steuersignal erzeugt und an die EDV 24 über das Datenkabel 30 übertragen. Die EDV 24 empfängt nun vom Sensor 27 das Signal, das der aktuell vom Sensor 27 übermittelte Messgröße entspricht, über das Datenkabel 28 und verarbeitet das Signal im Prozessor 26. Das Verarbeiten des Signals bedeutet auch hier wiederum das oben beschriebene Vergleichen des Signals mit dem im Datenspeicher 25 gespeicherten Wertebereiches. Im beschriebenen Fall befindet sich die Aufnahmeeinheit 2 nicht in Balance und die Stärke des Signals entspricht mithin einem Wert, der außerhalb des im Datenspeicher 25 hinterlegten Wertebereiches liegt. Somit kann die EDV 24 nunmehr feststellen, dass sich die Aufnahmeeinheit 2 nicht in Balance befindet. Daher steuert die EDV 24 die Bremse zunächst nicht zum Überführen der Bremse 6 in die zweite Stellung an.

Wiederum kann die EDV 24, wie oben ausgeführt, auf Grundlage des Vergleichens der Höhe Signals, der wiederum der Höhe der Messgröße entspricht, mit dem im Speicher 25 hinterlegten Wertebereich feststellen, ob die der Gewichtskraft entgegengerichtete Federkraft der Gasdruckfeder 7 betragsmäßig kleiner ober betragsmäßig größer ist als die Gewichtskraft. Im vorliegenden Fall ist durch das Entfernen des Computermonitors 23 die Federkraft zu groß um die Gewichtskraft auszugleichen. Der Messwert liegt somit unterhalb des Wertebereichs.

Die EDV 24 steuert nun den Ventilator 29 solange an, bis die vom Sensor 27 bestimmte Messgröße innerhalb des im Datenspeicher 25 hinterlegten Wertebereiches liegt. Durch das Aktivieren des Ventilators 19 wird Gas aus der Druckgaskammer der Druckgasfeder 7 über den Schlauch 17 in den Gastank 16 geleitet. Folglich verringert sich mit der weniger werdenden Druckgasmenge in der Druckgaskammer die Federkraft. Wenn die vom Sensor 27 bestimmte Messgröße innerhalb des Wertebereiches liegt, steuert die EDV 24 den Ventilator nicht mehr an.

Die Federkraft und die ihr entgegenwirkende Gewichtskraft gleichen sich somit wieder aus.

Weiterhin liegt das Verstellsignal durch das Berühren der Kapazitätssensoren 21, 22 durch den Benutzer vor und die EDV 24 stellt auf Grundlage der vom Sensor 27 bestimmten aktuellen Messgröße fest, dass sich die Aufnahmeeinheit 2 in Balance befindet. Somit liegen die gleichen Gegebenheiten wie in dem zuvor beschriebenen ersten Fall vor. Die Federkraft der Gasdruckfeder 7 wurde an die Gewichtskraft angepasst. Eine Höhenverstellung der Aufnahmeeinheit 2 kann nun wie oben beschrieben durch den Benutzer durchgeführt werden.

Die Aufnahmevorrichtung 1 ist ferner so ausgebildet, dass eine Anpassung der Federkraft an die Gewichtskraft kontinuierlich oder in Intervallen und unabhängig vom Steuersignal durchgeführt wird. Der Sensor 27 bestimmt also beispielsweise in zeitlich definierten Abständen die aktuelle Messgröße und übermittelt diese in Form eines Signals über das Datenkabel 28 an die EDV 24. Wenn die auf diese Weise bestimmte Messgröße außerhalb des im Datenspeicher 25 hinterlegten Wertebereiches liegt, steuert die EDV 24 die Stellmittel 19, 20 solange an, bis die Messgröße innerhalb des Wertebereiches liegt. Die EDV 24 kann also ohne das Vorliegen eines Verstellsignals bei arretierter Aufnahmeeinheit 2 die Federkraft anpassen. Wenn der Benutzer dann eine Höhenverstellung der Aufnahmeeinheit 2 durch Berühren der Kapazitätssensoren 21, 22 anzeigt, kann ein Überführen der Bremse 6 vorteilhaft schnell ohne ein Anpassen der Federkraft an die Gewichtskraft erfolgen. Vor dem Lösen der Bremse 6 findet jedoch in jedem Fall eine Überprüfung, ob die durch den Sensor 27 bestimmte Messgröße innerhalb des Wertebereiches liegt, durch die EDV 24 statt.

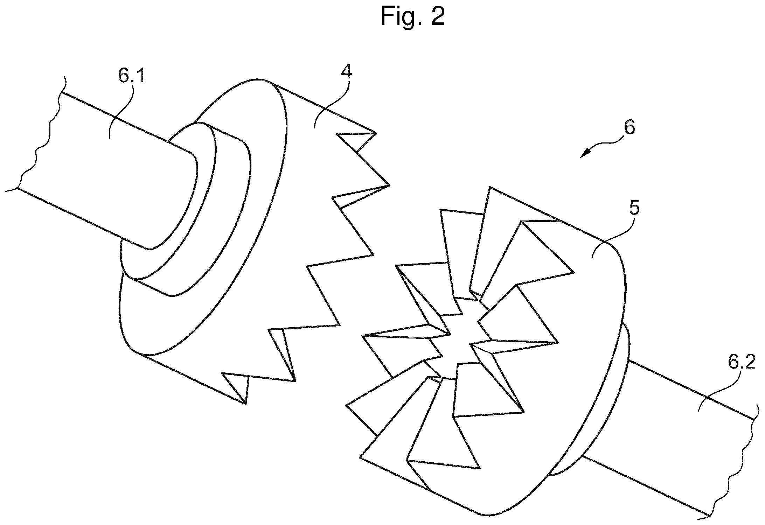

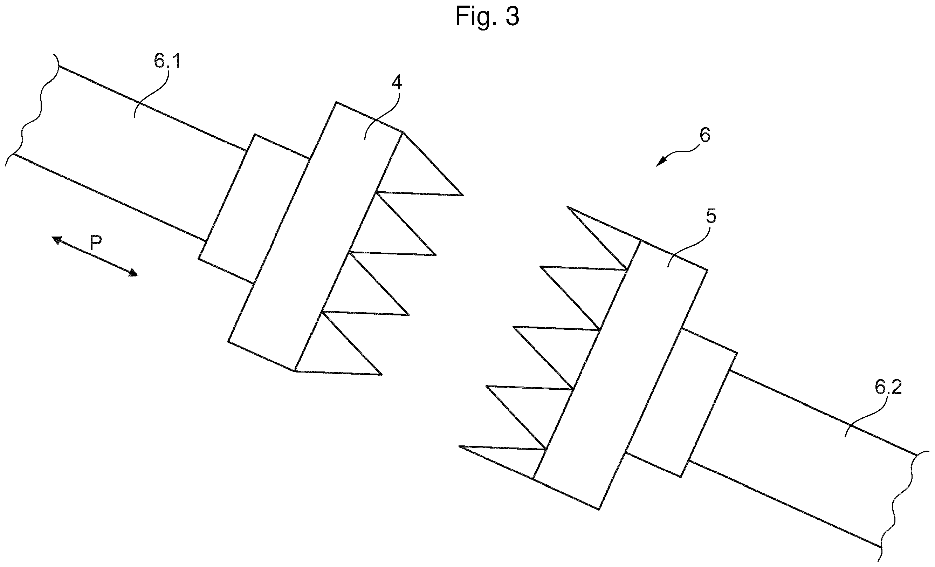

In der Detailansicht der Figur 2 und in der Seitenansicht der Figur 3 wird eine mögliche Ausführungsform der Bremse 6 in der zweiten Stellung dargestellt. Die Eingriffsmittel 4, 5 berühren sich in der zweiten Stellung nicht, so dass die Aufnahmeeinheit 2 höhenverstellbar ist. Der Abschnitt 6.1 der Bremse 6 ist dabei entlang der Achse P bewegbar. Der Abschnitt 6.2 der Bremse 6 ist nicht entlang der Achse P bewegbar. Die Ausgestaltung der Eingriffsmittel 4, 5 der Bremse 6 ermöglichen dabei in Drehrichtung um die Achse P verschiedene Eingriffspositionen, so dass die Eingriffsmittel 4, 5 in unterschiedlichen Positionen ineinandergreifen können.

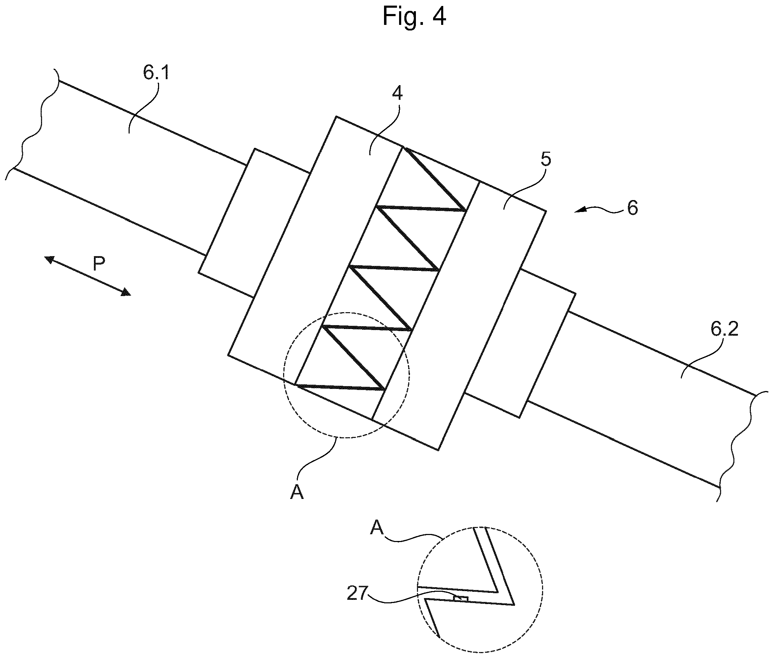

In Figur 4 ist die Bremse 6 in der ersten Stellung abgebildet, wobei die Eingriffsmittel 4, 5 ineinandergreifen und die Aufnahmeeinheit 2 in einer bestimmten Höhe arretieren. Dabei nimmt das Eingriffsmittel 4 das auf das Eingriffsmittel 5 wirkende Drehmoment entlang der Achse P auf. Da das Eingriffsmittel 4 verdrehest gelagert ist und nur entlang der Achse P beweglich ist, arretiert die Bremse 6 in der ersten Stellung die Aufnahmeeinheit 2. Dabei kann die Bremse 6 sowohl positive als auch negative Drehmomente, abhängig von der Federkraft und der Gesamtgewichtskraft, aufnehmen.

Weiterhin ist in Figur 4 eine Detailansicht A der Eingriffsbereiche in der zweiten Stellung abgebildet. Dabei ist ein Sensor 27 in Form eines Drucksensors an dem Eingriffsmittel 5 zu erkennen. In dem in der Detailansicht A dargestellten Zustand befindet sich die Aufnahmevorrichtung 1 beziehungsweise die Aufnahmeeinheit 2 in Balance. Die Eingriffsmittel 4,5 werden nicht durch ein auf das Eingriffsmittel 5 wirkendes Drehmoment gegeneinander verdreht. Vielmehr weisen die Eingriffsmittel 4, 5 einen geringen Abstand zueinander auf. Der Sensor 27 misst dabei einen Wert der dem bestimmten Wert entspricht beziehungsweise ist dem bestimmten Wertebereich liegt. Die Bremse 6 kann somit in die zweite Stellung überführt werden und damit die Aufnahmeeinheit 2 höhenverstellt werden. Dabei wird der vom Sensor 27 gemessene Wert an die EDV 24 übermittelt und abhängig von dem Wert die Steuermittel 13 angesteuert.

Würde nun ein Kräfteungleichgewicht zwischen der Gesamtgewichtskraft und der entgegen wirkenden die Federkraft entstehen, würde durch das auf das Eingriffsmittel 5 wirkende Drehmoment die Kraft am Sensor 27 messbar sein. Die Bremse 6 stellt dann immer noch die Arretierung der Aufnahmeeinheit 2 sicher und würde sich dann nicht in die zweite Stellung überführen lassen, solange bis der vom Sensor 27 gemessene Wert dem bestimmten Wert entspricht beziehungsweise in dem bestimmten Wertebereich liegt.

Alternativ könnte der Sensor 27 dabei so an einem der Eingriffsmittel 4, 5 angebracht sein, dass der Sensor 27 ein positives und ein negatives Drehmoment, welches auf das Eingriffsmittel 5 wirkt, feststellen kann. Auch das Anbringen eines Sensors 27, welcher an mehreren Stellen in Drehrichtung einen Wert messen kann ist denkbar. Dabei ist insbesondere auch denkbar, dass durch den vom Sensor 27 gemessenen Wert ebenfalls eine Kraftgröße des Drehmomentes bestimmt werden kann, vorzugsweise durch die EDV 24. Auf Grundlage des vom Sensor 27 gemessenen Wertes kann somit die Kraftgröße und die Drehrichtung des Kräfteungleichgewichtes, in welchem sich die Aufnahmeeinheit 2 befindet, bestimmt werden. Folglich kann dann durch ein Wirken der Stellmittel 15 die Aufnahmeeinheit 2 wieder in Balance gebracht werden.

Prinzipiell kann es sich bei dem Sensor 27 um ein jedes Messmittel handeln, welches dazu in der Lage ist, eine auf einen Teil der Bremse 6 (insbesondere ein auf das Eingriffsmittel 5 wirkendes Drehmoment) wirkende Kraft als physikalische Größe zu messen. Dabei ist die physikalische Größe dazu geeignet das wirkende Kräfteverhältnis in der Aufnahmevorrichtung 1 beziehungsweise an der Bremse 6 zu bestimmen, wenn sich die Bremse 6 in der ersten Stellung befindet. Vorzugsweise ist mittels der physikalischen Größe beziehungsweise des durch den Sensor 27 bestimmten Wertes auch die Drehrichtung sowie die Kraftgröße des Kräfteungleichgewichtes bestimmbar, so dass auf dieser Grundlage eine Balance durch die Stellmittel 15 hergestellt werden kann. Insbesondere kann es sich bei dem Sensor 27 auch um einen Drehmomenten-Sensor oder um einen 3D-Magentsensor handeln. Ein Drehmomenten-Sensor ist dann beispielsweise auf der Drehachse der Eingriffsmittel 4, 5 angeordnet. Auch die Verwendung eines Sensors 27, der eine Relativbewegung zwischen den Eingriffsmitteln 4, 5 misst, um ein Kräfteungleichgewicht festzustellen, ist möglich. Weiterhin ist auch die Verwendung eines optischen Sensors denkbar, welcher die Stellung der Eingriffsmittel 4, 5 zueinander bestimmt, insbesondere um auf das Kräfteverhältnis schließen zu können.

## Patentansprüche

1. Aufnahmevorrichtung (1), umfassend:
1.1 eine höhenverstellbare Aufnahmeeinheit (2);
1.2 wenigstens eine Gasdruckfeder (7), die zum Ausgleich von auf die Aufnahmeeinheit (2) wirkenden Kräften ausgebildet ist;
1.3 eine Bremse (6), die zur Einnahme einer ersten Stellung und einer zweiten Stellung ausgebildet ist, wobei
1.3.1 die Bremse (6) in der ersten Stellung die Aufnahmeeinheit (2) derart arretiert, dass die Aufnahmeeinheit nicht höhenverstellbar ist, und
1.3.2 die Bremse (6) in der zweiten Stellung die Aufnahmeeinheit (2) nicht arretiert, so dass die Aufnahmeeinheit (2) höhenverstellbar ist;
1.4 einen Sensor (27), durch den eine Messgröße bestimmbar ist, die durch auf die Aufnahmeeinheit (2) wirkende Kräfte veränderbar ist, wenn die Bremse (6) die erste Stellung einnimmt;
1.5 Steuermittel (13), durch die die Bremse (6) zur Einnahme der ersten Stellung oder der zweiten Stellung ansteuerbar ist, wobei die Steuermittel (13) derart eingerichtet sind, dass die Bremse (6) durch die Steuermittel (13) in Abhängigkeit der vom Sensor (27) bestimmbaren Messgröße ansteuerbar ist.

2. Aufnahmevorrichtung (1) nach Anspruch 1, wobei die Steuermittel (13) derart eingerichtet sind, dass die Bremse (6) nur zur Einnahme der zweiten Stellung ansteuerbar ist, wenn die vom Sensor (27) bestimmbare Messgröße einem bestimmten Wert entspricht oder die Messgröße innerhalb eines bestimmten Wertebereiches liegt.

3. Aufnahmevorrichtung (1) nach Anspruch 2, wobei die Steuermittel (13) derart eingerichtet sind, dass die Bremse (6) nur zur Einnahme der zweiten Stellung ansteuerbar ist, wenn ein Steuersignal vorliegt.

4. Aufnahmevorrichtung (1) nach Anspruch 2 und 3, wobei die Steuermittel (13) derart eingerichtet sind, dass die Bremse (6) nur zur Einnahme der zweiten Stellung ansteuerbar ist, wenn gleichzeitig die vom Sensor (27) bestimmbare Messgröße einem bestimmten Wert entspricht oder in die Messgröße innerhalb eines bestimmten Wertebereiches liegt und das Steuersignal vorliegt.

5. Aufnahmevorrichtung (1) nach wenigstens einem der vorhergehenden Ansprüche, die derart ausgebildet ist, dass die von dem Sensor (27) bestimmbare Messgröße von den auf die Aufnahmeeinheit (2) wirkenden Kräften abhängt.

6. Aufnahmevorrichtung (1) nach wenigstens einem der vorhergehenden Ansprüche, die derart ausgebildet ist, dass die vom Sensor (27) bestimmbare Messgröße von der resultierenden Kraft von wenigstens zwei auf die Aufnahmeeinheit (2) wirkenden Kräften abhängt.

7. Aufnahmevorrichtung (1) nach wenigstens einem der vorhergehenden Ansprüche, wobei die wenigstens eine Gasdruckfeder (7) eine auf die Aufnahmeeinheit (2) wirkende Federkraft bereitstellt.

8. Aufnahmevorrichtung (1) nach Anspruch 7, wobei die Federkraft veränderbar ist.

9. Aufnahmevorrichtung (1) nach Anspruch 7, wobei die Federkraft in Abhängigkeit der vom Sensor (27) bestimmbaren Messgröße veränderbar ist.

10. Aufnahmevorrichtung (1) nach Anspruch 7, wobei die Federkraft nur dann veränderbar ist, wenn die Bremse (6) die erste Stellung einnimmt.

11. Aufnahmevorrichtung (1) nach Anspruch 7, wobei die Federkraft durch Stellmittel (15) veränderbar ist.

12. Aufnahmevorrichtung (1) nach Anspruch 11, wobei die Federkraft in Abhängigkeit der vom Sensor (27) bestimmbaren Messgröße durch die Stellmittel (15) veränderbar ist.

13. Aufnahmevorrichtung (1) nach Anspruch wenigstens einem der Ansprüche 11 oder 12, wobei die Steuermittel (13) und/oder die Stellmittel (15) von einer elektronischen Datenverarbeitungsvorrichtung (24) ansteuerbar sind.

14. Verfahren zur Ansteuerung einer auf eine höhenverstellbare Aufnahmeeinheit (2) einer Aufnahmevorrichtung (1) wirkenden Bremse (6), umfassend die folgenden Merkmale:
14.1 Zur Verfügungstellung einer Aufnahmevorrichtung (1) nach wenigstens einem der Ansprüche 1 bis 13;
14.2 Ansteuerung der Bremse (6) durch die Steuermittel (13).

15. Verfahren nach Anspruch 14, wobei die Steuermittel (13) derart eingerichtet sind, dass die Bremse (6) nur zur Einnahme der zweiten Stellung angesteuert wird, wenn
15.1 die vom Sensor (27) bestimmbare Messgröße einem bestimmten Wert entspricht oder in die Messgröße innerhalb eines bestimmten Wertebereiches liegt, und
15.2 das Steuersignal vorliegt.

## Claims

1. A pick-up device (1) comprising:
1.1 A height-adjustable pick-up unit (2);
1.2 at least one gas pressure spring (7) which is designed to compensate for forces acting on the pick-up unit (2);
1.3 a brake (6) which is designed to take up a first position and a second position, wherein
1.3.1 the brake (6) in the first position locks the pick-up unit (2) in such a way that the pick-up unit is not height-adjustable, and
1.3.2 the brake (6) in the second position does not lock the pick-up unit (2), so that the pick-up unit (2) is adjustable in height;
1.4 a sensor (27) by means of which a measured variable can be determined which can be changed by forces acting on the pick-up unit (2) when the brake (6) takes up the first position;
1.5 control means (13) by means of which the brake (6) can be actuated to take up the first position or the second position, the control means (13) being set up in such a way that the brake (6) can be actuated by the control means (13) as a function of the measured variable which can be determined by the sensor (27).

2. Pick-up device (1) according to claim 1, wherein the control means (13) are set up in such a way that the brake (6) can only be actuated to take up the second position if the measured variable which can be determined by the sensor (27) corresponds to a specific value or the measured variable lies within a specific value range.

3. Pick-up device (1) according to claim 2, wherein the control means (13) are set up in such a way that the brake (6) can only be actuated to take up the second position if a control signal is present.

4. Pick-up device (1) according to claims 2 and 3, wherein the control means (13) are set up in such a way that the brake (6) can only be actuated to take up the second position if at the same time the measured variable which can be determined by the sensor (27) corresponds to a specific value or lies within a specific value range in the measured variable and the control signal is present.

5. Pick-up device (1) according to at least one of the preceding claims, which is designed in such a way that the measured variable which can be determined by the sensor (27) depends on the forces acting on the pick-up unit (2).

6. Pick-up device (1) according to at least one of the preceding claims, which is designed in such a way that the measured variable which can be determined by the sensor (27) depends on the resulting force of at least two forces acting on the pick-up unit (2).

7. Pick-up device (1) according to at least one of the preceding claims, wherein the at least one gas pressure spring (7) provides a spring force acting on the pick-up unit (2).

8. Pick-up device (1) according to claim 7, wherein the spring force is changeable.

9. Pick-up device (1) according to claim 7, wherein the spring force is changeable as a function of the measured variable which can be determined by the sensor (27).

10. Pick-up device (1) according to claim 7, wherein the spring force can only be changed when the brake (6) takes up the first position.

11. Pick-up device (1) according to claim 7, wherein the spring force can be changed by adjusting means (15).

12. Pick-up device (1) according to claim 11, wherein the spring force can be changed by the adjusting means (15) as a function of the measured variable which can be determined by the sensor (27).

13. Pick-up device (1) according to claim 11 or 12, wherein the control means (13) and/or the adjusting means (15) can be controlled by an electronic data processing device (24).

14. A method for controlling a brake (6) acting on a height-adjustable pick-up unit (2) of a pick-up device (1), comprising the following features:
14.1 Providing a pick-up device (1) according to at least one of the claims 1 to 13;
14.2 activating of the brake (6) by the control means (13).

15. Method according to claim 14, wherein the control means (13) are set up in such a way that the brake (6) is only controlled to take the second position when
15.1 the measurable variable which can be determined by the sensor (27) corresponds to a certain value or lies within a certain value range, and
15.2 the control signal is present.

## Revendications

1. Dispositif de réception (1) comprenant :
1.1 une unité de réception réglable en hauteur (2) ;
1.2 au moins un ressort à gaz (7) réalisé pour la compensation de forces agissant sur l'unité de réception (2) ;
1.3 un frein (6) réalisé pour adopter une première position et une deuxième position, dans lequel
1.3.1 le frein (6), dans la première position, arrête l'unité de réception (2) de telle sorte que l'unité de réception n'est pas réglable en hauteur, et
1.3.2 le frein (6), dans la deuxième position, n'arrête pas l'unité de réception (2) de telle sorte que l'unité de réception (2) est réglable en hauteur ;
1.4 un capteur (27) grâce auquel une grandeur de mesure peut être déterminée, laquelle est variable grâce à des forces agissant sur l'unité de réception (2) lorsque le frein (6) adopte la première position ;
1.5 des moyens de commande (13) grâce auxquels le frein (6) peut être commandé pour adopter la première position ou la deuxième position, dans lequel les moyens de commande (13) sont étudiés de telle sorte que le frein (6) peut être commandé par les moyens de commande (13) en fonction de la grandeur de mesure pouvant être définie par le capteur (27).

2. Dispositif de réception (1) selon la revendication 1, dans lequel les moyens de commande (13) sont étudiés de telle sorte que le frein (6) peut être commandé seulement pour adopter la deuxième position lorsque la grandeur de mesure définissable par le capteur (27) correspond à une valeur définie ou que la grandeur de mesure se situe dans les limites d'une plage de valeurs définie.

3. Dispositif de réception (1) selon la revendication 2, dans lequel les moyens de commande (13) sont étudiés de telle sorte que le frein (6) peut être commandé seulement pour l'adoption de la deuxième position lorsqu'il y a un signal de commande.

4. Dispositif de réception (1) selon les revendications 2 et 3, dans lequel les moyens de commande (13) sont étudiés de telle sorte que le frein (6) peut être commandé seulement pour adopter la deuxième position lorsque la grandeur de mesure définissable par le capteur (27) correspond simultanément à une valeur définie ou que la grandeur de mesure se situe dans les limites d'une plage de valeurs définie et qu'il y a le signal de commande.

5. Dispositif de réception (1) selon l'une au moins des revendications précédentes, lequel est réalisé de telle sorte que la grandeur de mesure pouvant être définie par le capteur (27) dépend des forces agissant sur l'unité de réception (2).

6. Dispositif de réception (1) selon l'une au moins des revendications précédentes, lequel est réalisé de telle sorte que la grandeur de mesure pouvant être définie par le capteur (27) dépend de la force résultante d'au moins deux forces agissant sur l'unité de réception (2).

7. Dispositif de réception (1) selon l'une au moins des revendications précédentes, dans lequel l'au moins un ressort à gaz (7) met à disposition une force élastique agissant sur l'unité de réception (2).

8. Dispositif de réception (1) selon la revendication 7, dans lequel la force élastique est variable.

9. Dispositif de réception (1) selon la revendication 7, dans lequel la force élastique est variable en fonction de la grandeur de mesure pouvant être définie par le capteur (27).

10. Dispositif de réception (1) selon la revendication 7, dans lequel la force élastique est variable seulement lorsque le frein (6) adopte la première position.

11. Dispositif de réception (1) selon la revendication 7, dans lequel la force élastique est variable grâce à des moyens de réglage (15).

12. Dispositif de réception (1) selon la revendication 11, dans lequel la force élastique est variable en fonction de la grandeur de mesure pouvant être définie par le capteur (27) grâce aux moyens de réglage (15).

13. Dispositif de réception (1) selon l'une au moins des revendications 11 ou 12, dans lequel les moyens de commande (13) et/ou les moyens de réglage (15) peuvent être commandés par un dispositif électronique de traitement de données (24).

14. Procédé de commande d'un frein (6) agissant sur une unité de réception réglable en hauteur (2) d'un dispositif de réception (1), comprenant les caractéristiques suivantes :
14.1 la mise à disposition d'un dispositif de réception (1) selon l'une au moins des revendications 1 à 13 ;
14.2 la commande du frein (6) par les moyens de commande (13).

15. Procédé selon la revendication 14, dans lequel les moyens de commande (13) sont étudiés de telle sorte que le frein (6) est commandé pour seulement adopter la deuxième position lorsque
15.1 la grandeur de mesure pouvant être définie par le capteur (27) correspond à une valeur définie ou la grandeur de mesure se situe dans les limites d'une plage de valeurs définie, et
15.2 le signal de commande est présent.
